# EUROPEAN PATENT APPLICATION

(11) **EP 2 133 479 A2**
(43) Date of publication of application: **16.12.2009**
(21) Application number: 09162369.4
(22) Date of filing: 10.06.2009
(51) Int. Cl.: E04B 1/00, E04B 2/90, F16B 5/06

(54) **Method and anchor for suspending structural parts from a floor**

(30) Priority: 11.06.2008 NL 1035568
(71) Applicant: Olde Hanter Holding B.V., 7575 EJ Oldenzaal (NL)
(72) Inventor: Olde Hanter, Johannes Gerardus Jozef Maria, 7575 EJ Oldenzaal (NL)
(74) Representative: Bakker, Hendrik

(57) **Abstract**

The invention relates to a method for suspending structural parts such as walls (10) and balconies from a floor (3), wherein anchors (1) are mounted on or in the floor, to which anchors the structural parts or supports for the structural parts are then fixed. According to the inventive method the anchors are clamped onto the floor. For this purpose a first pressing plate (4) is placed on the floor, a second pressing plate (5) is placed under the floor, and the first pressing plate and the second pressing plate are pulled toward each other, preferably using an eccentric and a lever coupled thereto.

## Description

The present invention relates to a method for suspending structural parts such as walls and balconies from a floor, wherein anchors are mounted on or in the floor, to which anchors the structural parts or supports for the structural parts are then fixed.

According to the prior art holes are made on the side part of the floor and anchors are then fixed therein, for instance using a mortar. The drawback here is that this connection cannot be tested and can fail suddenly, which necessitates expensive repairs. It is further practically impossible to fix anchors in this manner in the many channel plates applied, because pieces almost always break away from the channel plates when the holes are being made. The field of application of the channel plates is hereby limited.

The method according to the invention obviates these drawbacks and has the feature that the anchors are clamped onto the floor. A first pressing plate is here preferably placed on the floor, a second pressing plate is preferably placed under the floor, and the first pressing plate and the second pressing plate are then pulled toward each other. The first pressing plate and the second pressing plate are preferably pulled toward each other using an eccentric and a lever coupled thereto, so that the anchor can be placed with a single operation and with little effort.

A favourable realization of the inventive method has the feature that a spring is tensioned when the first pressing plate and the second pressing plate are pulled toward each other. This spring then realizes a constant pressure force of the first pressing plate and the second pressing plate on the floor, this guaranteeing the stability of the connection even after a long period of time.

A further favourable realization of the inventive method, with which it is easily possible to determine that the pressure force exceeds a predetermined value, has the feature that the extent to which the spring is tensioned can be read. If the predetermined pressure force is exceeded, the friction herein occurring between the pressing plates and the floor then guarantees a predetermined load-bearing capacity of the anchor.

The invention also relates to an anchor for suspending structural parts from a floor. The inventive anchor has the feature that it comprises a clamp consisting of a body, a first pressing plate mounted on the body and lying at least substantially perpendicularly thereof, and a second pressing plate mounted slidably on the body and lying at least substantially perpendicularly thereof, in addition to pulling means for pulling the second pressing plate toward the first pressing plate. A thus embodied anchor can be clamped onto a floor plate and can then be immediately loaded. It is moreover not necessary to drill holes in the floor plate or otherwise damage the floor plates. Finally, the anchor, if placed incorrectly, can be easily displaced without leaving traces.

A favourable embodiment of the inventive anchor has the feature that the pulling means comprise a screw thread connection provided with a pull rod attached to the body and a nut. By tightening the nut with a torque wrench a predetermined pressure force of the pressing plates can then be realized in simple manner.

A very favourable embodiment, wherein the predetermined pressure force is retained for a long period of time, has the feature that the pulling means also comprise spring means for maintaining a predetermined pulling force. The pulling means preferably comprise a set of spring washers (Belleville washers) which enable a compact construction.

A further favourable embodiment has the feature that the body is provided with an indicator mark which indicates that the spring means have been compressed to a predetermined length. It is then no longer necessary to use a torque wrench. It is now possible instead, using the indicator mark, to establish objectively that the predetermined pressure force has been reached.

A further favourable embodiment, wherein the predetermined pressure force always results in a predetermined desired friction, has the feature that the pressing plates are each provided with a plate of wood, rubber or plastic, placed such that the plate is situated between the pressing plate and the floor in a position of use. The plate is here selected for a high friction coefficient and for a long lifespan.

A further very favourable embodiment has the feature that the second pressing plate is mounted slidably on the body and that the anchor is provided with an eccentric mounted rotatably on the body and a lever for the purpose of sliding the second pressing plate toward the first pressing plate. The nut of the pulling means can then be embodied as wing nut, and when the anchor is placed the wing nut can be tightened by hand until it stops. The lever is then operated, wherein a predetermined pressure force is achieved. It can then be determined using the indicator mark that the predetermined pressure force has indeed be realized, thereby guaranteeing the specified load-bearing capacity of the anchor.

The invention will now be further elucidated with reference to the following figures, in which:
- Fig. 1: shows schematically a possible application of an anchor according to the invention;
- Fig. 2A: shows a side view in more detail of a possible embodiment of the inventive anchor;
- Fig. 2B: shows a front view of this embodiment;
- Fig. 3A: shows a side view of an alternative embodiment of the inventive anchor in non-tensioned state;
- Fig. 3B: shows this embodiment in tensioned state.

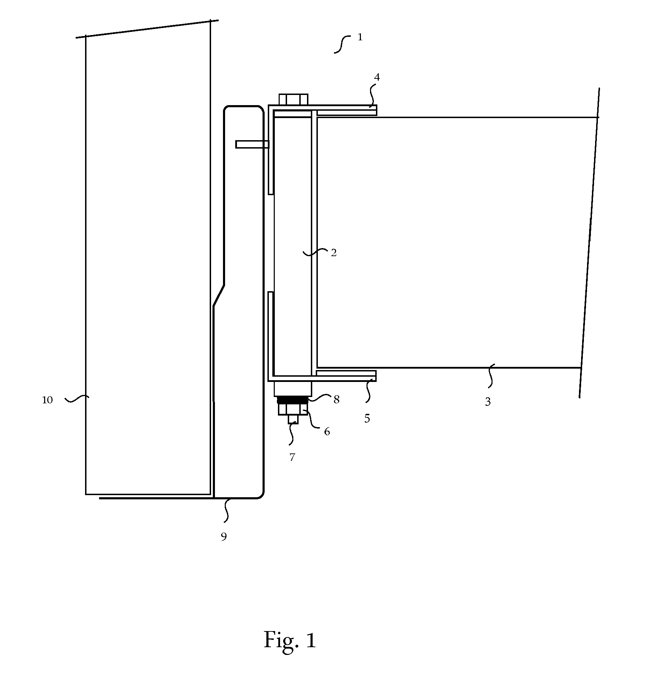

Fig. 1 shows schematically a possible application of an anchor 1 according to the invention. Anchor 1 consists of a body 2 which is pressed against a floor 3, and a first pressing plate 4 and a second pressing plate 5 placed respectively above and below floor 3. A nut 6 is then screwed onto a pull rod 7 using a torque wrench, wherein a set of spring washers 8 is compressed. At a predetermined moment anchor 1 clamps around floor 3 such that anchor 1 can be loaded to a predetermined weight, for instance 500 kg. A per se known facade support 9 can now for instance be attached to anchor 1 using per se known fastening means and adjusting means (not further shown), after which a wall 10 can be placed on a number of anchors and facade supports arranged in this manner. It will be evident that other structural elements, such as exterior facing panels, balconies and the like, can also be attached to floor 3 with the use of anchors 1.

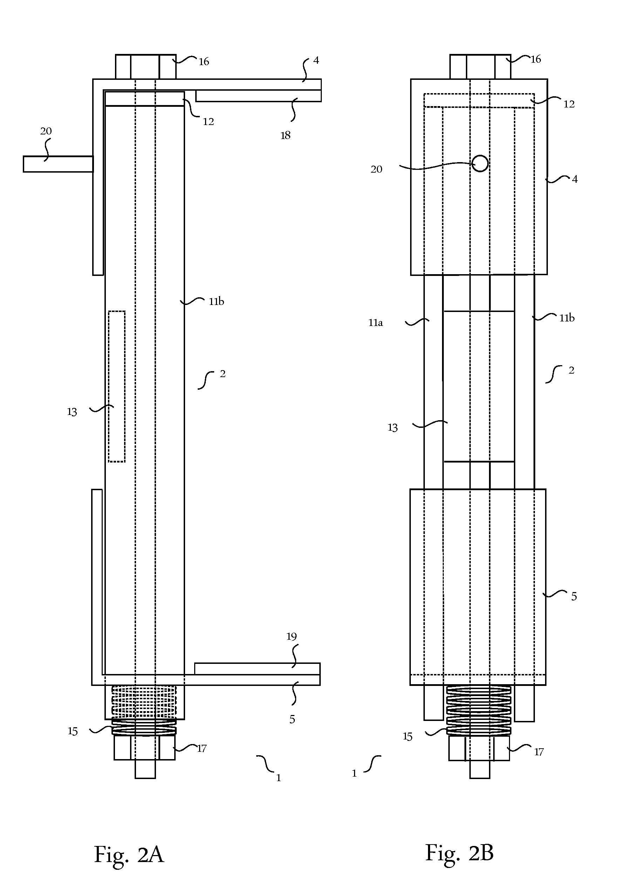

Fig. 2A shows in more detail a side view of a possible embodiment of the inventive anchor. Anchor 1 consists of a body assembled from two mutually parallel steel strips 11 a, 11 b, which are connected at the top to a welded-on steel plate 12 and at the front to a welded-on steel plate 13. On the upper side pressing plate 4 is placed on body 2 and on the lower side pressing plate 5 can slide over strips 11a,11b.

Pressing plate 5 is provided for this purpose with two rectangular holes which fit precisely round strips 11a,11b. Placed under pressing plate 5 is a set of spring washers 15, and the whole is held together by a bolt 16 and a nut 17 screwed thereon. Anchor 1 is placed on the edge of a floor or floor plate, after which nut 17 is tightened with a predetermined torque. In order to increase the friction between floor 3 and pressing plates 4,5, pressing plates 4,5 are preferably provided with plates 18,19 manufactured from a hard plastic such as PVC. Welded onto pressing plate 4 is a threaded end 20, from which a facade support can for instance be suspended. It is also possible to provide steel plate 13 with a hole with internal screw thread, on which the facade support can be mounted.

Fig. 2B shows a front view of this embodiment, with strips 11a,11b, welded-on steel plate 12, welded-on steel plate 13, pressing plate 4 and pressing plate 5 which can slide over strips 11a,11b. Also shown are spring washers 15, bolt 16 and nut 17, with which anchor 1 can be tightened.

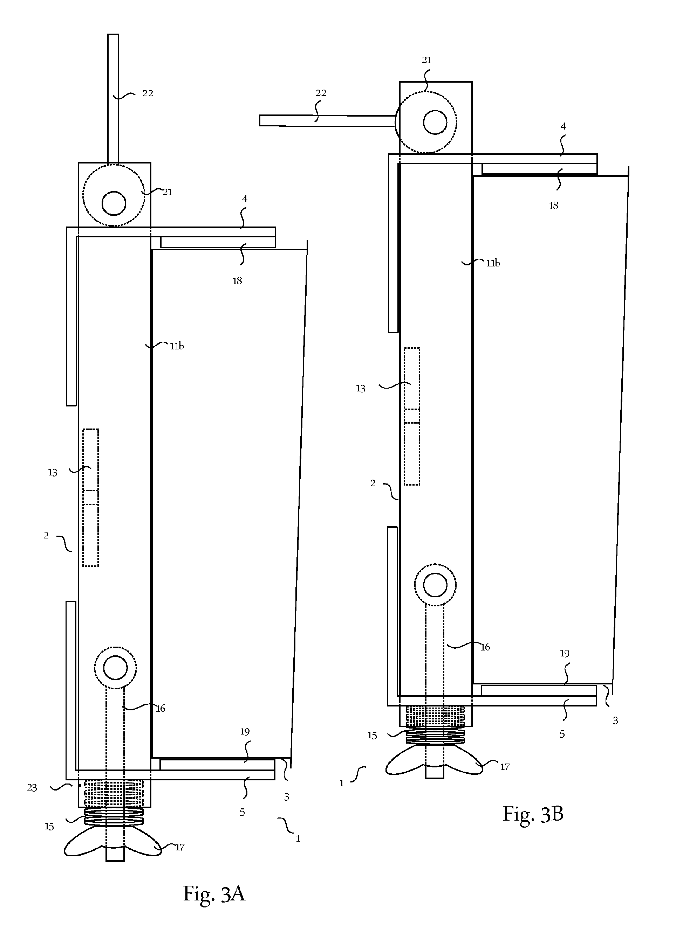

Fig. 3A shows a side view of an alternative embodiment of the inventive anchor in non-tensioned state. Anchor 1 consists of a body assembled from two mutually parallel steel strips 11a,11b, over the upper side of which pressing plate 4 can slide and over the lower side of which pressing plate 5 can slide. Pressing plate 4 and pressing plate 5 are each provided for this purpose with two rectangular holes which fit precisely round strips 11a,11b. At the front strips 11a,11b are connected to a welded-on steel plate 13. Placed under pressing plate 5 is a set of spring washers 15, and the whole is held together by a bolt 16 which is anchored in strips 11a,11b and a nut 17 screwed thereon. Placed above pressing plate 4 is an eccentrically mounted disc 21, which is provided with a lever 22. Anchor 1 is placed on the edge of a floor or floor plate, after which nut 17 is tightened by hand until it stops. Lever 22 is then pressed downward, wherein the set of spring washers 15 is tensioned, this as can be seen in Fig. 3B. The front side of strips 11 a, 11 b can be provided with a groove 23 which moves in the direction of pressing plate 5 during tightening and becomes invisible when the set of spring washers 15 has been sufficiently tightened. In order to increase the friction between floor 3 and pressing plates 4,5, pressing plates 4,5 are preferably provided with plates 18,19 manufactured from a hard plastic such as PVC. Lever 22 can for instance be used to suspend a facade support therefrom. In the embodiment shown here, steel plate 13 is also provided with a hole with internal screw thread on which the facade support can be mounted.

## Claims

1. Method for suspending structural parts such as walls and balconies from a floor, wherein anchors are mounted on or in the floor, to which anchors the structural parts or supports for the structural parts are then fixed, **characterized in that** the anchors are clamped onto the floor.

2. Method as claimed in claim 1, **characterized in that** a first pressing plate is placed on the floor, a second pressing plate is placed under the floor, and that the first pressing plate and the second pressing plate are pulled toward each other.

3. Method as claimed in claim 2, **characterized in that** the first pressing plate and the second pressing plate are pulled toward each other using an eccentric and a lever coupled thereto.

4. Method as claimed in claim 2 or 3, **characterized in that** a spring is tensioned when the first pressing plate and the second pressing plate are pulled toward each other.

5. Method as claimed in claim 4, **characterized in that** the extent to which the spring is tensioned can be read.

6. Anchor for suspending structural parts from a floor, **characterized in that** the anchor comprises a clamp consisting of a body, a first pressing plate mounted on the body and lying at least substantially perpendicularly thereof, and a second pressing plate mounted slidably on the body and lying at least substantially perpendicularly thereof, in addition to pulling means for pulling the second pressing plate toward the first pressing plate.

7. Anchor as claimed in claim 6, **characterized in that** the pulling means comprise a screw thread connection provided with a pull rod attached to the body and a nut.

8. Anchor as claimed in claim 7, **characterized in that** the pulling means also comprise spring means for maintaining a predetermined pulling force.

9. Anchor as claimed in claim 8, **characterized in that** the spring means comprise a set of spring washers.

10. Anchor as claimed in claim 8 or 9, **characterized in that** the body is provided with an indicator mark which indicates that the spring means have been compressed to a predetermined length.

11. Anchor as claimed in any of the claims 6-10, **characterized in that** the pressing plates are each provided with a plate of wood, rubber or plastic, placed such that the plate is situated between the pressing plate and the floor in a position of use.

12. Anchor as claimed in any of the claims 6-11, **characterized in that** the second pressing plate is mounted slidably on the body and that the anchor is provided with an eccentric mounted rotatably on the body and a lever for the purpose of sliding the second pressing plate toward the first pressing plate.

13. Anchor as claimed in any of the claims 6-12, **characterized in that** the anchor is adapted to perform the method according to any of the claims 1-5.
